# EUROPEAN PATENT APPLICATION

(11) **EP 3 608 542 A1**
(43) Date of publication of application: **12.02.2020**
(21) Application number: 19190924.1
(22) Date of filing: 09.08.2019
(51) Int. Cl.: F04C 11/00

(54) **MOUNTING STRUCTURE OF ELECTRIC PUMP**

(30) Priority: 09.08.2018 JP 2018150345
(71) Applicant: AISIN SEIKI KABUSHIKI KAISHA, Kariya-shi Aichi-ken, 448-8650 (JP)
(72) Inventor: IWASE, SHOGO, Aichi-ken, 448-8650 (JP); HATA, HIROKAZU, Aichi-ken, 448-8650 (JP)
(74) Representative: D Young & Co LLP

(57) **Abstract**

A mounting structure of an electric pump (100) includes an electric pump (100) and a transmission case (70). The electric pump includes a pump unit (2), a motor unit (1) interconnected to the pump unit and configured to drive the pump unit, a control unit (3) disposed on an opposite side to the pump unit with respect to the motor unit and configured to control an operation of the motor unit, and a housing (10) configured to house at least a part of the control unit in a housing recess (15). To the transmission case, the electric pump is mounted. The housing recess of the housing is opened on an opposite side to the motor unit. The electric pump is mounted to the transmission case in such a way that an opened side of the housing recess is covered and closed with a wall portion (71) of the transmission case.

## Description

### TECHNICAL FIELD

This disclosure generally relates to a mounting structure of an electric pump used in a vehicle such as an automobile.

### BACKGROUND DISCUSSION

In recent years, with consideration for global environmental issues, there have been proposed vehicles such as an automobile provided with an idling stop function in which an engine is stopped for a short stop of time at an intersection or the like and which suppresses a discharge of exhaust gas and a consumption of gasoline. An engine is not operated at the time of operating the idling stop function, but even in the case, it is necessary to maintain oil hydraulic of a transmission. Therefore, maintenance of oil hydraulic is achieved by using an electric pump drivable and capable of supplying and circulating oil (an example of hydraulic oil) even in a case where the engine is not operated.

JP2013-122251A (Reference 1) and JP2011-52682A (Reference 2) disclose a configuration of housing an electric pump in a transmission case (a transmission housing in References 1 and 2). The transmission case is provided with a concave portion which houses the electric pump. A cover which covers the concave portion is disposed on an opening side of the concave portion, and the electric pump is mounted to the transmission by fixing the cover to the transmission case.

JP2015-175291A (Reference 3) discloses a configuration of installing an electric pump on an inner wall side of a transmission case. With this installation structure, a pump housing and a motor unit of the electric pump are integrally mounted on the inner wall of the transmission case, and a control unit (a driver unit) which controls rotation of the motor is mounted outside the transmission case. The control unit is housed in a concave portion formed outside the transmission case, and an opening side of the concave portion is covered with a cover fixed to the transmission case.

Each of the electric pumps in References 1 and 2 is housed in the concave portion provided to the transmission case. Therefore, the case requires the concave portion having a large space for housing the electric pump. In the electric pump in Reference 3, the pump and the motor are mounted on the inner wall of the transmission case and the control unit is mounted in a concave portion of an outer wall of the transmission case, and thus the pump and the motor located inside and the control unit located outside across the transmission case are spaced apart from each other. This complicates a configuration for connecting the control unit to the motor in the electric pump mounted to the transmission case.

Moreover, in a case where the electric pump is mounted to the transmission case, each of the electric pumps in References 1 and 2 requires that the electric pump be disposed in the concave portion of the transmission case in a proper posture and then the cover which covers an opening of the concave portion be fixed to the transmission case. The electric pump in Reference 3 requires that the motor and the pump be fixed on the inner wall of the transmission case with bolts, the control unit be disposed in the concave portion of the outer wall of the transmission case, and then the cover which covers the opening of the concave portion be fixed to the transmission case. Thus, the electric pumps in References 1 to 3 require the cover to be mounted when mounting to the transmission case, which tends to increase in the number of manufacturing steps and generate higher costs.

Thus, in a case where the electric pump is mounted to the transmission case, there is room for further improvement.

In view of the above, a need thus exists for a mounting structure of an electric pump which can be easily mounted to a transmission case.

### SUMMARY

A feature configuration of a mounting structure of an electric pump according to this disclosure includes an electric pump and a transmission case. The electric pump includes a pump unit, a motor unit interconnected to the pump unit and configured to drive the pump unit, a control unit disposed on an opposite side to the pump unit with respect to the motor unit and configured to control an operation of the motor unit, and a housing configured to house at least a part of the control unit in a housing recess. To the transmission case, the electric pump is mounted. The housing recess of the housing is opened on an opposite side to the motor unit. The electric pump is mounted to the transmission case in such a way that an opened side of the housing recess is covered and closed with a wall portion of the transmission case.

According to this configuration, at least a part of the control unit of the electric pump is housed in the housing recess of the housing, and the electric pump is mounted to the transmission case in such a way that an opened side of the housing recess is covered and closed with the wall portion of the transmission case, and thereby the transmission case functions as a cover and eliminates need for the cover which covers the control unit in the electric pump. Moreover, when mounting the electric pump to the transmission case, the electric pump can be mounted to the transmission while leaving, in an open state, an opposite side to the motor unit of the housing recess which houses the control unit. This eliminates need for a step of covering the control unit with the cover before mounting the electric pump to the transmission case. This allows for reducing the number of components of the electric pump and a step of mounting the electric pump to the transmission case, and configuring the electric pump at a low cost.

Another feature configuration is that the electric pump is mounted on an inner wall side of the wall portion of the transmission case.

In a case where the electric pump is mounted on an outer wall side of the wall portion of the transmission case, it is necessary to provide a space in which the electric pump can be disposed around the transmission, and the space disposed around the transmission is different depending on a vehicle model. Therefore, in a case where a vehicle fails to ensure a space for the volume where the electric pump protrudes outside the transmission, the electric pump may fail to be mounted. However, in a case where the electric pump is mounted on the inner wall side of the wall portion of the transmission case according to this configuration, the electric pump is prevented from considerably protruding outside the transmission case, and thereby the electric pump can be provided on the transmission reliably regardless of whether the space around the transmission is large or small.

Still another feature configuration is that the control unit is disposed between the housing recess and a concave portion of the transmission case.

According to this configuration, the control unit is disposed between the housing recess and the concave portion. In other words, even in a case where a space for disposing the electric pump around the transmission is limited, a part (the control unit) of the electric pump is disposed so as to enter the transmission, and thereby the electric pump can be provided on the transmission reliably regardless of whether the space around the transmission is large or small

Yet another feature configuration is that the control unit is housed so as to avoid protruding outward from the opened side of the housing recess.

In a case where the control unit of the electric pump protrudes outward from the opened side of the housing recess of the housing when mounting the electric pump to the wall portion of the transmission case, the wall portion of the transmission case needs to be formed into, for example, a concave shape so as to avoid bringing into contact with a portion which externally protrudes in the control unit. In order to overcome this problem, according to this configuration, the control unit is housed so as to avoid protruding outward from the opened side of the housing recess of the housing. Accordingly, the wall portion of the transmission case which covers the control unit eliminates need for forming a concave portion or the like according to a shape of the control unit and allows for preventing the transmission case from protruding outward. Therefore, the wall portion of the transmission case opposing the control unit can be formed into a flat plate shape, for example. As a result, the electric pump can be easily mounted even to a transmission case having a simple shape.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross sectional view illustrating a mounted state of an electric pump;
Fig. 2 is a perspective view illustrating a state before mounting the electric pump;
Fig. 3 is a perspective view illustrating the mounted state of the electric pump; and
Fig. 4 is a cross sectional view of a main portion illustrating a mounted state of an electric pump according to another embodiment.

### DETAILED DESCRIPTION

Hereinafter, a mounting structure of an electric pump according to embodiments of this disclosure will be described with reference to the attached drawings. In the embodiments, an oil pump 100 used in a vehicle will be described as an example of the electric pump. However, this disclosure is not limited to the following embodiments and various modifications can be made without departing from the gist of the disclosure.

### First Embodiment

### Basic Configuration

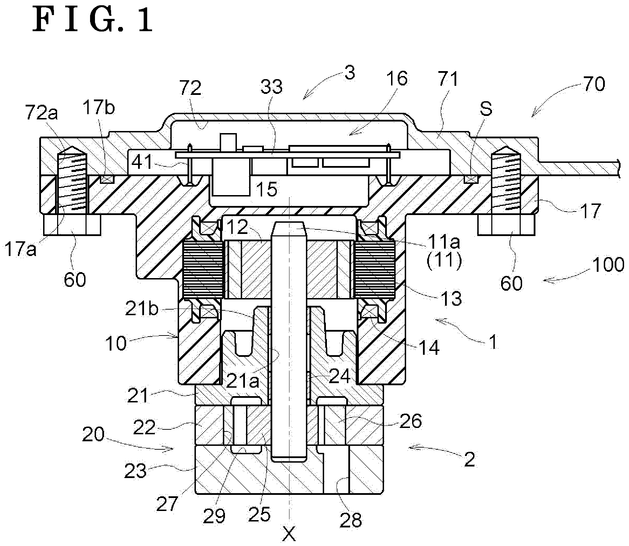

As illustrated in Figs. 1 to 3, the oil pump 100 includes a pump unit 2, a motor unit 1 interconnected to the pump unit 2 and configured to drive the pump unit 2, and a control unit 3 configured to control the motor unit 1. As illustrated in Fig. 1, the pump unit 2 is connected on one side of a rotational shaft 11 based on the motor unit 1 having the rotational shaft 11. The motor unit 1 is housed in a motor housing 10 (an example of a housing), and the pump unit 2 is housed in a pump housing 20. The oil pump 100 is configured by connecting the pump housing 20 to the motor housing 10. The control unit 3 is disposed on an opposite side to the pump unit 2 (other side of the rotational shaft 11 based on the motor unit 1) in the motor housing 10.

As illustrated in Fig. 1, the motor unit 1 includes the rotational shaft 11 supported to be rotatable about a rotational axis X, a motor rotor 12 fixed to an end portion 11 a of the rotational shaft 11, and a stator 13 which is disposed in an region surrounding the motor rotor 12 and is supported by the motor housing 10. The motor rotor 12 includes a back yoke and a plurality of permanent magnets, and a coil 14 is wound around a stator core constituting the stator 13. The motor unit 1 is configured with a three-phase brushless motor which generates a rotating magnetic field to the stator 13 and rotates the motor rotor 12 (rotational shaft 11) by energizing the coil 14. The stator 13 is insert-molded into the motor housing 10 in a state where bus bars for three phases which electrically connect an end portion of the coil 14 are linearly exposed.

The motor housing 10 is fitted to a transmission case (hereinafter, referred to as a mission case) 70, and a circuit board 33 as the control unit 3 configured to control the motor unit 1 is housed in a closed space 16 formed between the motor housing 10 and the mission case 70. A housing recess 15 formed to the motor housing 10 is included in the closed space 16. Electronic components (not illustrated) such as a microcomputer, an inverter circuit, a coil, and a capacitor are implemented on the circuit board 33, some of which are housed in the housing recess 15. The control unit 3 supplies electric power for driving the motor unit 1 and controls operations such as driving, rotation, and stopping of the motor unit 1.

The circuit board 33 of the control unit 3 and the coil 14 of the motor unit 1 are electrically connected via a connection pin 41. On the control unit 3 side, the connection pin 41 is connected by penetrating through the circuit board 33 and soldering to a land of a wiring pattern. As illustrated in Fig. 1, around the control unit 3 in the motor housing 10, a flange unit 17 which is fastened with bolts 60 and fixes the oil pump 100 to the mission case 70 is provided.

The pump unit 2 is configured in an internal-gear type by including an inner rotor 25 as the pump rotor and an outer rotor 26. The inner rotor 25, having a plurality of external teeth, is engaged and connected in an intermediate portion of the rotational shaft 11 so as to rotate around the rotational axis X. The outer rotor 26 includes a plurality of internal teeth which engage with the external teeth of the inner rotor 25 and is housed in a pump space 27 of the pump housing 20 so as to rotate around an eccentric axis parallel to the rotational axis X.

The pump housing 20 is constituted of a first housing 21, a second housing 22, and a third housing 23. The first housing 21 is formed with an insertion hole portion 21a through which a portion continuous to the end portion 11a of the rotational shaft 11 is inserted. The first housing 21 includes a protruding portion 21b on a side opposing the motor housing 10, and the protruding portion 21b is provided with a bearing portion 24 which supports the rotational shaft 11. The second housing 22 is formed with the pump space 27 which houses the inner rotor 25 and the outer rotor 26. The third housing 23 is formed with a suction port 28 which communicates with a negative pressure side of the pump space 27, and a discharge port 29 which communicates with a high pressure side of the pump space 27.

On the pump housing 20 side of the motor housing 10, a motor space for housing the motor rotor 12 is formed, and the oil pump 100 is configured so as to determine a relative position between the motor housing 10 and the pump housing 20 by fitting the protruding portion 21b of the first housing 21 into the motor space. The motor housing 10 and the pump housing 20 (the first housing 21, the second housing 22, and the third housing 23) are configured by connecting with bolts (not illustrated).

### Mounting Structure of Oil Pump

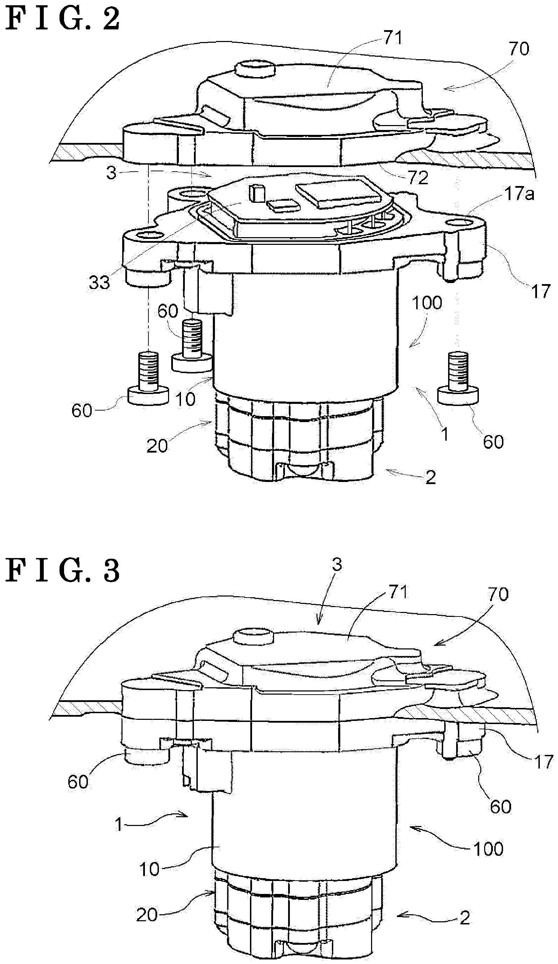

Next, a structure for mounting the oil pump 100 to the mission case 70 will be described. As illustrated in Figs. 1 and 2, the motor housing 10 of the oil pump 100 is assembled to the mission case 70 from a side of an inner wall (a concave portion) 72 of the mission case 70. Each bolt 60 is inserted into the flange unit 17 of the motor housing 10, and the bolt 60 which penetrates through the flange unit 17 is fastened to a thread groove 72a of the inner wall (the concave portion) 72 of the mission case 70. Accordingly, the oil pump 100 is fixed to the mission case 70, and the closed space 16 is formed between the mission case 70 and the motor housing 10 (see Figs. 1 and 3).

In the motor housing 10, the control unit 3 is housed and disposed in the closed space 16 formed on an opposite side to the pump housing 20, in other words, on a position opposing the inner wall (the concave portion) 72 of a wall portion 71 of the mission case 70. The control unit 3 is covered and closed with the motor housing 10 and the wall portion 71 of the mission case 70.

As illustrated in Fig. 1, on a boundary surface between the flange unit 17 of the motor housing 10 and the mission case 70, a seal groove 17b for fitting a seal member S is formed. A portion on which the seal groove 17b of the flange unit 17 is formed brings into contact with the wall portion 71 of the mission case 70. This seals the control unit 3 of the oil pump 100 disposed in the closed space 16.

In a conventional oil pump, the control unit 3 is covered with a dedicated cover, and the control unit 3 is sealed with an oil pump alone. On the other hand, a through-hole is formed on the mission case, and the oil pump is mounted on the mission case with bolts and the like in a state where the cover is inserted into the through-hole.

When comparing the mounting structure between the first embodiment and the conventional oil pump, the first embodiment has a following advantage. In the oil pump 100 according to the first embodiment, a function relating to the cover which covers the control unit 3 in the conventional oil pump, in other words, a function of forming the closed space 16 is achieved by the mission case 70. This eliminates need for the cover which covers the control unit 3 in the oil pump 100, and allows for reducing the number of components for mounting the oil pump 100 to the mission case 70. In addition, this eliminates need for forming the through-hole on the mission case 70, which makes it possible to configure the oil pump 100 at a low cost. Moreover, eliminating need for the cover which covers the control unit 3 in the oil pump 100 makes it possible to configure the oil pump 100 compactly. Heat generated by the circuit board 33 and the like in the control unit 3 of the oil pump 100 can be radiated via the entire mission case 70, which makes it possible to enhance a heat radiation effect of the control unit 3. In particular, a known heat radiation member (not illustrated) is inserted into a gap between the circuit board 33 of the closed space 16 and the mission case 70, which makes it possible to effectively transfer the heat generated by the circuit board 33 to the mission case 70 and radiate the heat.

The mounting structure of the above mentioned conventional oil pump is required to process a seal groove for a seal member in both, between the motor housing and the cover, and between the motor housing and the outer wall of the mission case, at a time of mounting the oil pump to the mission case. On the other hand, in the first embodiment, the seal groove 17b for the seal member S needs to be processed only between the flange unit 17 of the motor housing 10 and the inner wall (the concave portion) 72 of the mission case 70. This allows for reducing groove processing to the oil pump 100 and the mission case 70 and decreasing the number of seal members to be used.

Moreover, in the conventional oil pump mounted to the mission case, the cover which covers the control unit 3 is exposed from the outer wall side of the mission case. Therefore, in a case where the cover which covers the control unit 3 is made of metal such as aluminum, it is necessary to perform alumite processing or the like to a surface of the cover and provide a rust-prevention structure. On the other hand, the oil pump 100 according to the first embodiment allows the wall portion 71 of the mission case 70 to cover the control unit 3 and has no cover which covers the control unit 3, which eliminates need for rust-prevention treatment in the oil pump 100. This achieves a simple configuration of the oil pump 100. Moreover, the oil pump 100 can be configured inexpensively.

### Second Embodiment

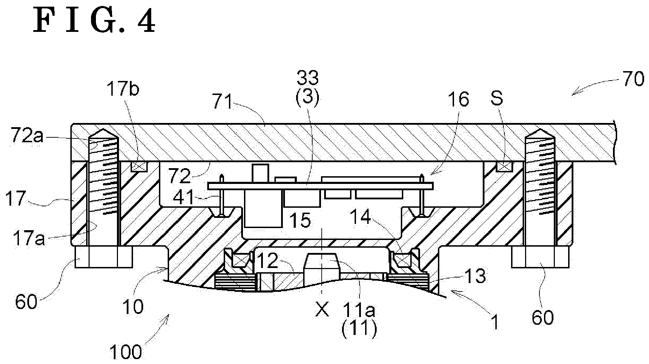

Hereinafter, an oil pump 100 according to a second embodiment of this disclosure will be described with reference to Fig. 4. In the following description of this embodiment, the same reference numerals will be given to the same components as those in the first embodiment, and descriptions related to similar configurations will be omitted.

In the second embodiment, as illustrated in Fig. 4, the oil pump 100 includes the housing recess 15 formed on a side opposing the wall portion 71 of the mission case 70 in the motor housing 10, and the control unit 3 is housed so as to avoid protruding outward from the opened side of the housing recess 15. In other words, the entire control unit 3 such as the circuit board 33 and electronic components provided on the circuit board 33 is housed in the housing recess 15 and is prevented from protruding from the opened side of the housing recess 15 toward the wall portion 71 of the mission case 70. In this embodiment, the closed space 16 and the housing recess 15 are the same space.

Since the entire control unit 3 is housed in the housing recess 15, a portion of the wall portion 71 of the mission case 70, on which the oil pump 100 is mounted can be formed in a flat plate shape. This eliminates need for forming the concave portion or the like to the mission case 70 according to a shape of the control unit 3, and allows for preventing the mission case 70 from protruding outward. Thus, the oil pump 100 can be easily mounted to the mission case 70 having a simple shape.

### Other Embodiments

The abovementioned embodiments illustrate the examples of mounting the oil pump 100 to the inner wall 72 side of the wall portion 71 of the mission case 70. However, in a case where a vehicle can ensure a space of the volume where the oil pump 100 protrudes outside the mission case 70, the oil pump 100 may be configured to be mounted on the outer wall side of the wall portion 71 of the mission case 70.

This disclosure is applicable to a mounting structure of an electric pump used in a vehicle such as an automobile.

## Claims

1. A mounting structure of an electric pump, comprising:
an electric pump including
a pump unit,
a motor unit interconnected to the pump unit and configured to drive the pump unit,
a control unit disposed on an opposite side to the pump unit with respect to the motor unit and configured to control an operation of the motor unit, and
a housing configured to house at least a part of the control unit in a housing recess; and
a transmission case to which the electric pump is mounted, wherein
the housing recess of the housing is opened on an opposite side to the motor unit, and
the electric pump is mounted to the transmission case in such a way that an opened side of the housing recess is covered and closed with a wall portion of the transmission case.

2. The mounting structure of the electric pump according to claim 1, wherein the electric pump is mounted on an inner wall side of the wall portion of the transmission case.

3. The mounting structure of the electric pump according to claim 1, wherein the control unit is disposed between the housing recess and a concave portion of the transmission case.

4. The mounting structure of the electric pump according to claim 1 or 2, wherein the control unit is housed so as to avoid protruding outward from an opened side of the housing recess.
